(19) **Europäisches Patentamt** / **European Patent Office** / **Office européen des brevets**

(11) **EP 4 484 746 B1**

(12) **EUROPEAN PATENT SPECIFICATION**

(45) Date of publication and mention
of the grant of the patent:
**25.02.2026 Bulletin 2026/09**

(21) Application number: **24175703.8**

(22) Date of filing: **14.05.2024**

(51) International Patent Classification (IPC):
***F03D 13/20*** *(2016.01)*

(52) Cooperative Patent Classification (CPC):
**F03D 13/206;** E02D 27/425; F05B 2240/95

(54) **A METHOD FOR STRUCTURALLY DESIGNING A FLANGED CONNECTION**

VERFAHREN ZUR STRUKTURELLEN GESTALTUNG EINER FLANSCHVERBINDUNG

PROCÉDÉ DE CONCEPTION STRUCTURELLE D'UNE CONNEXION À BRIDE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.06.2023 DK PA202370342**

(43) Date of publication of application:
**01.01.2025 Bulletin 2025/01**

(73) Proprietor: **Rambøll Danmark A/S**
**2300 Copenhagen S (DK)**

(72) Inventors:
• **JENSEN, Jacob Fisker**
**2800 Kongens Lyngby (DK)**

• **GÓMEZ, Marcos Álvarez**
**2770 Kastrup (DK)**
• **VISTISEN, Martin**
**8680 Ry (DK)**
• **KRISTIANSEN, Brian Nørgaard**
**6700 Esbjerg (DK)**

(74) Representative: **Patentgruppen A/S**
**Aaboulevarden 31, 4th Floor**
**8000 Aarhus C (DK)**

(56) References cited:
**EP-A1- 2 508 677     CN-A- 103 174 159**
**CN-U- 204 151 809**

## Description

## Background of the invention

The invention relates to a method for structurally designing a flanged connection between a transition piece and a monopile foundation of an offshore wind turbine installation, wherein a bottom L-shaped flange of the transition piece is connected to a top L-shaped flange of the monopile foundation by means of a plurality of bolts.

## Description of the Related Art

Offshore wind turbines are often placed on a monopile foundation with a transition piece arranged between the two. However, modern offshore wind turbines are gradually becoming so big that normal structural designs and design methods no longer can be used or result in very expensive designs and particularly the flanged connection between the bottom flange of the transition piece and the top flange of the monopile foundation is severely strained when the offshore wind turbine increases in height and size. Traditionally, this flanged connection is formed by inwards facing L-shaped flanges at the bottom of the transition piece and the top of the monopile foundation being bolted together by means of a plurality of bolts and if the load on this flanged connection increases the solution would be to increase the size of the flanges and the bolts. However, if the bolt size is increased, the bolts have to be moved further away from the inside wall of the transition piece and monopile in order to accommodate the larger bolts and tightening tool and this will in turn reduce the capacity of the flanged connection due to the elongated flange - which is ending in a vicious circle.

Thus, from the European patent EP 2 497 878 B1 it is known to redesign the traditional L-shaped flange to provide it with a bulge on the outside surface to strengthen the flange. However, this flange design only improves the capacity of the flanged connection a little while making it excessively material consuming.

Documents considered during the patent prosecution are i.a.: CN 204 151 809 U, CN 103 174 159 A and EP 2 508 677 A1.

An object of the invention is therefore to provide for a cost-efficient method for structurally designing a flanged connection between a transition piece and a monopile foundation of an offshore wind turbine installation.

## The invention

The invention provides for a method for structurally designing a flanged connection between a transition piece and a monopile foundation of an offshore wind turbine installation, wherein the flanged connection comprises a bottom L-shaped flange of the transition piece connected to a top L-shaped flange of the monopile foundation by means of a plurality of bolts of the flanged connection, wherein a skirt part extending downwards from the transition piece is encircling an upper part of the monopile foundation and wherein an inside surface of the skirt part is connected to an outside surface of the upper part of the monopile foundation by means of a cement containing substance. The method comprises the steps of:

- determining design load specifications for the offshore wind turbine installation by means of a computer system, the design load specifications being associated with a specific erection site of the offshore wind turbine installation,
- computing the load carrying contribution of the cement containing substance under the design load specifications by means of a computer system, and
- dimensioning the bottom L-shaped flange of the transition piece, the top L-shaped flange of the monopile foundation, and the plurality of bolts under the design load specifications while taking into account the computed load carrying contribution of the cement containing substance by means of a computer system.

Monopiles are typically rammed into the seabed using great force until the upper flange of the monopile is located just above sea level and it is therefore highly undesirable to weld brackets and the like to the monopile - e.g., for holding boat landings or other - in that these brackets would locally weaken the monopile and therefore require increased material thickness or other to be able to endure the ramming process. However, the transition piece is placed on the monopile by means of a crane or the like and it is therefore advantageous to provide the transition piece with a skirt part extending downwards from the transition piece so that boat landing supports and the like can be connected to this less strained skirt. Once the transition piece is installed on the monopile a cement containing substance such as grout is injected into the gap between the inside surface of the skirt part and the outside surface of the upper part of the monopile to thereby seal the flanged connection between the transition piece and the monopile from ingress of water and other from the outside, and to prevent the skirt from bending when being subject to loads e.g., from boats bumping against the boat landing.

However, the inventors of the present invention have realised that this grout sealing has the further effect of relieving the loads on the critical part of the flanged connection - particularly relieving loads on the bolts diametrically arranged opposite in the flanged connection of the part of the flanged connection experiencing the most compression under a bending load - and it is therefore advantageous to determine the load carrying contribution of the cement containing substance under the design load specifications at a specific erection site of the offshore wind turbine installation, and then include this calculated load carrying contribution when dimensioning the flanged connection parts - i.e., the bottom L-shaped flange of the transition piece, the top L-shaped flange of the monopile foundation, and the plurality of bolts - under the determined design load specifications, in that it hereby is possible to increase the size of the offshore wind turbine installation and/or increase the loads on the offshore wind turbine installation without having to increase the load capacity of the flanged connection because some of these loads are carried by the connection between the skirt part and upper part of the monopile formed by the cement containing substance. Thereby, the use of a traditional L-shaped flange can be extended instead of shifting to other connection types which are more complex and expensive to design.

Furthermore, taking into account the load carrying contribution of the cement containing substance present in the annulus formed by the transition piece skirt and monopile is advantageous in that the load transfer through the flanged connection is more symmetric in that part of the force travels through the transition piece skirt and the cement containing substance rather than purely through the bolts and monopile. A more symmetric load transfer is advantageous in that the flanged connection experiences less prying force which has the effect of pulling the flange surfaces apart from each other.

It should be noted that in this context the term *"cement containing substance"* should be understood as any mixture that contains cement - i.e., the term includes any kind of grout, mortar, concrete, plaster or the like.

In an aspect of the invention, only cement containing substance located in the bottom 80%, preferably the bottom 65% and most preferred the bottom 50% of the vertical overlap of the skirt part of the transition piece and the upper part of the monopile foundation is included in the computing of the load carrying contribution of the cement containing substance.

The gap between the skirt part and the monopile is typically not filled all the way up to the flanged connection with the cement containing substance, and even if it was the load carrying contribution of the upper part of this grout connection is negligible as the relative deformation between the skirt part and upper part of the monopile is less in this area, whereby the load carrying contribution from the cement containing substance is less. The present location ranges are therefore advantageous in that it is ensured that cement containing substance actually not present is not included in the load carrying contribution. Hereby the efficiency of the present design method is increased without substantially reducing the load carrying contribution of the cement containing substance.

Furthermore, only accounting for the cement containing substance located in the mentioned range ensures a more conservative design in that less cement containing substance is considered for the purpose of load carrying. This is advantageous in that the method becomes more efficient and at the same time offers a robust flange design.

In an aspect of the invention, the design load specifications associated with the specific erection site of the offshore wind turbine installation are determined on the basis of permanent loads comprising gravity loads and/or environmental loads comprising wind-, wave-, seismic and/or current loads at the erection site.

It is advantageous if the design load specifications associated to a specific erection site of the offshore wind turbines are determined based on the permanent loads and/or environmental loads at the erection site in that the flanged connection is designed to withstand the loads specifically at that site, thereby ensuring that the flanged connection is not designed conservatively or non-conservatively.

In this context, the term "erection site" could be either the entire wind farm whereby the same flange design is used across all the offshore wind turbine installations being part of that wind farm, or it could be understood as the specific position of an offshore wind turbine installation within a wind farm, thereby designing position-specific flanged connections.

In an aspect of the invention, the method further comprises excluding any gravity loads when determining the design load specifications for the offshore wind turbine installation.

Gravity loads - i.e., design loads originating from gravitational force on the offshore wind turbine installation causing gravity loads in the offshore wind turbine - have very little impact when computing the load carrying contribution of the cement containing substance and dimensioning the flanged connection parts - in comparison to e.g., bending loads - and it is therefore advantageous to exclude any gravity loads from the design load specifications, in that this simplifies the calculations substantially without compromising the method of structurally designing the flanged connection - i.e., substantially without affecting the dimensions of the flanged connection and without reducing the load carrying contribution of the cement containing substance.

In an aspect of the invention, the method further comprises excluding any shear loads when determining the design load specifications for the offshore wind turbine installation.

Loads - i.e., design loads originating from e.g., wind loads, wave loads and/or current loads on the offshore wind turbine installation causing shear loads in the offshore wind turbine - have very little impact when computing the load carrying contribution of the cement containing substance and dimensioning the flanged connection parts - in comparison to e.g., bending loads - and it is therefore advantageous to excluded any shear loads from the design load specifications, in that this simplifies the calculations substantially without compromising the method of structurally designing the flanged connection - i.e., substantially without affecting the dimensions of the flanged connection and without reducing the load carrying contribution of the cement containing substance.

In an aspect of the invention, the load carrying contribution of the cement containing substance under the design load specifications is computed via material stiffness matrices representing the stiffness of the cement containing substance.

Computing the load carrying contribution from the cement containing substance is carried out on a computer in order to solve the structural problem. More particularly, the problem can be solved by subdividing the entire structure into smaller elements connected by nodes and solving the vast number governing equations element by element. The structural behaviour can be represented by a spring with some stiffness, k. It follows from Hooke's law that the relationship between the spring deformation, x, and the force exerted by/to the spring follows the relation F=k*x for simple, linear problems.

For a large number of equations, this relation can be formulated in matrix form as {F}=[K]*{x}.

In engineering, it is desired to understand the deformation, x, of a structure under the load F. Thus, above equation is therefore rearranged to

$$[F]*[K]^{-1} = \{x\}$$

Where $[K]^{-1}$ means the inverse of the matrix [K].

This equation requires the knowledge of {F} (this matrix is associated to the boundary conditions) and the material stiffness matrix [K] representing the spring stiffness of each of the elements representing the entire structure. Once the material stiffness matrix is known, the entire system of equations can be solved directly or iteratively.

Thus, it is advantageous if the load carrying contribution of the cement containing substance is computed by material stiffness matrices as it would therefore be an inherent part of the systems of equations having to be solved. Furthermore, computing the load carrying contribution of the cement by material stiffness matrices is advantageous in that it is suitable to compute and solve the structural problem by the Finite Element Method (FEM) which gives relatively accurate representation of the geometry.

It should be noted that above equation is valid for a simple, linear analysis. Naturally, if the analysis becomes more complex in the form of non-linear behaviour, the stiffness matrix, for instance, must be iteratively updated as the structure undergoes deformation, requiring that the stiffness matrix is updated continuously to capture the stiffness of the deformed structure correctly.

In an aspect of the invention, the load carrying contribution of the cement containing substance under the design load specifications is computed by modelling the cement containing substance as a non-linear material.

In normal engineering problems, it is sufficient to assume linear behaviour of the structure, or at least that deformations are in a linear regime. However, some problems are highly non-linear and it would be greatly inaccurate to model such behaviour by linear equations. The cement containing substance is usually a highly non-linear material and it is therefore advantageous to describe this behaviour by use of non-linear material models such that a more accurate load carrying contribution is obtained.

In this context, non-linear material model is understood as a non-linear relationship between the stress and strain on the material due to e.g. loading and temperature.

In an aspect of the invention, the method further comprises the step of selecting the cement containing substance such that the elastic modulus of the cement containing substance is between 2 and 14 times, preferably between 3 and 13 times and most preferred between 4 and 12 times smaller than the elastic modulus of the monopile foundation and/or the transition piece.

As the monopile and transition piece with skirt are subjected to a stress, the amount of strain is governed by the elastic modulus, or Young's modulus, of the material. At the interface between two components with different materials, for instance the contact between the cement containing substance and the monopile and/or transition piece skirt, a difference in the elastic modulus results in different stress or strain. Under a given loading the material with highest elastic modulus will dictate the deformation of the two components, obtaining a so-called master-slave effect. If the elastic modulus of the cement containing substance is too small compared to the elastic modulus of the monopile and/or transition piece, the cement containing substance will not provide enough load carrying capacity, and if the elastic modulus of the cement containing substance is too high compared to the elastic modulus of the monopile and/or transition piece, the monopile and/or transition piece skirt will not be allowed to deform sufficiently against the cement containing substance and therefore not enough contact pressure is built up to provide sufficient load carrying capacity. Above range is therefore considered an optimum to achieve highest load carrying capacity in the flanged connection.

In an aspect of the invention, the method further comprises including only bending moment loads when determining the design load specifications for the offshore wind turbine installation.

Loads - i.e., design loads originating from e.g., wind loads, wave loads and/or current loads on the offshore wind turbine installation causing bending loads in the offshore wind turbine - are by far the most important load to consider when computing the load carrying contribution of the cement containing substance and dimensioning the flanged connection parts and it is therefore advantageous to include only bending moment loads in the design load specifications, in that this simplifies the calculations substantially without compromising the method of structurally designing the flanged connection - i.e., substantially without affecting the dimensions of the flanged connection and without reducing the load carrying contribution of the cement containing substance.

In an aspect of the invention, the cement containing substance is grout.

Grout is a relatively inexpensive material with good adhesion qualities in relation to metal and it is therefore advantageous to use grout as the cement containing substance.

In an aspect of the invention, the design load specifications comprise a maximum load of a load time-series, the load time-series representing the loads on the flanged connection associated with the specific erection site of the offshore wind turbine installation as a function of time.

This is advantageous in that the flanged connection may be designed against a particular maximum load which may be considered the load component being governing for the design, thereby ensuring that the method of designing the flanged connection is more simple and simultaneously offers a robust design.

In an aspect of the invention, the design load specification comprises one or more of maximum bending moment, maximum shear force, maximum torsion and minimum axial force of a load time-series representing the loads on the flanged connection associated with the specific erection site of the offshore wind turbine installation as a function of time.

Since an offshore wind turbine installation is a highly dynamic structure with a complex load pattern and combination of loads, it is not necessary the case that e.g. maximum bending moment occurs at the same time as e.g. a maximum torsion. To ensure a safe design, it may often be assumed that the peak loads occur at the same time, thus creating a fictitious design load case. Thus, it is advantageous if the design load specification comprises one or more of above-mentioned load components in that a worst-case load scenario may be used to design the flanged connection, ensuring a robust design of the flanged connection.

In an aspect of the invention, the design load specification comprises only a maximum bending moment of a load time-series representing the bending moment loads on the flanged connection associated with the specific erection site of the offshore wind turbine installation as a function of time.

The main problem in designing a flanged connection is to avoid prying of the flange surfaces which strains the bolts heavily with the risk of failure of the structure. The flange surfaces are most prone to prying during bending moment loads, and it is therefore advantageous if the design load specification comprises only a maximum bending moment of a load time series in that the method is less complex and computation heavy while retaining a safe and robust flanged connection design.

In an aspect of the invention, the step of dimensioning the bottom L-shaped flange of the transition piece, the top L-shaped flange of the monopile foundation, and the plurality of bolts comprises dimensioning flange thickness and/or flange width and/or bolt size and/or number of bolts and/or bolt circle diameter.

Designing a flanged connection involves a lot of parameters, and depending on the stage of a design process, some dimensions of the flanged connection may already have been fixed. For instance, if a certain flange width is not possible to fabricate, it is advantageous to adjust the bolt size or number of bolts instead. In another situation, the number of bolts may already have reached its limit, and it is therefore advantageous to dimension another of the parameters instead.

Thus, above aspect of the invention is advantageous in that it is possible to dimension one or more of the mentioned parameters depending on the problem at hand, thereby providing for an efficient and flexible method of designing a flanged connection.

In an aspect of the invention, the method further comprises the step of selecting the cement containing substance such that the friction coefficient between the cement containing substance and the outside surface of the upper part of the monopile foundation and/or between the cement containing substance and the inside surface of the skirt part is between 0.10 and 0.9, preferably between 0.12 and 0.85, and most preferred between 0.14 and 0.8.

If the friction coefficient between the cement containing substance and the monopile and/or the skirt part is too low, a too small portion of the design load travels through the cement containing substance and skirt part thereby reducing its load carrying capacity. However, if the friction coefficient is too large, the skirt part will attract a large portion of the load so that the load transfer through the skirt part and cement containing substance is increased. It is not desirable that a large portion of the load is transferred through the skirt part as this would put high demand on the thin skirt part and the welds in it.

Thus, above range represents an advantageous load transfer distribution between the bolts in the flanged connection and the cement containing substance.

## Figures

The invention will be described in the following with reference to the figures in which

fig. 1    illustrates a large modern offshore wind turbine located on a transition piece and a monopile, as seen from the front,

fig. 2    illustrates a cross section through the middle of a transition piece and monopile foundation, as seen in an isometric view,

fig. 3    illustrates a cross section through the middle of a transition piece and monopile foundation, as seen from the front,

fig. 4    illustrates a closeup cut out through the middle of one side of a transition piece and monopile foundation, as seen from the front, and

fig. 5    illustrates a simplified table of the method of structurally designing a flanged connection.

**Detailed description of related art**

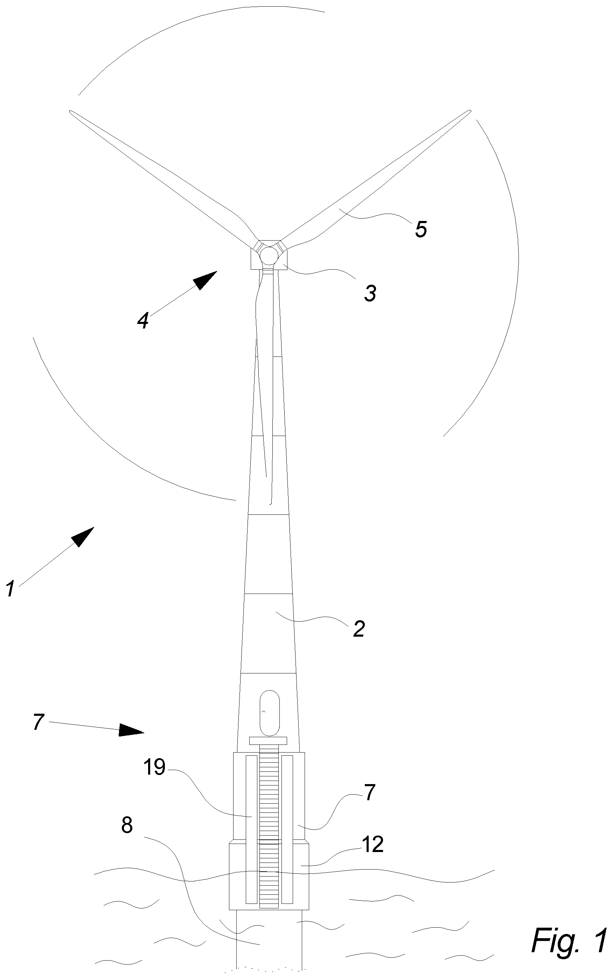

Fig. 1 illustrates a large modern offshore wind turbine installation 17 comprising a wind turbine 1 connected to a transition piece 7 which in turn is connected to a monopile foundation 8. In this embodiment the wind turbine 1 comprises a wind turbine nacelle 3 positioned on top of wind turbine tower 2. A wind turbine rotor 4 - in this case comprising three wind turbine blades 5 - is mounted on a common hub which is connected to the nacelle 3 through a shaft extending out of the nacelle 3 front. In another embodiment the wind turbine rotor 4 could comprise another number of blades 5 such as one, two, four, five or more. Also, the offshore wind turbine 1 could comprise several rotors, also known as multi-rotor wind turbines.

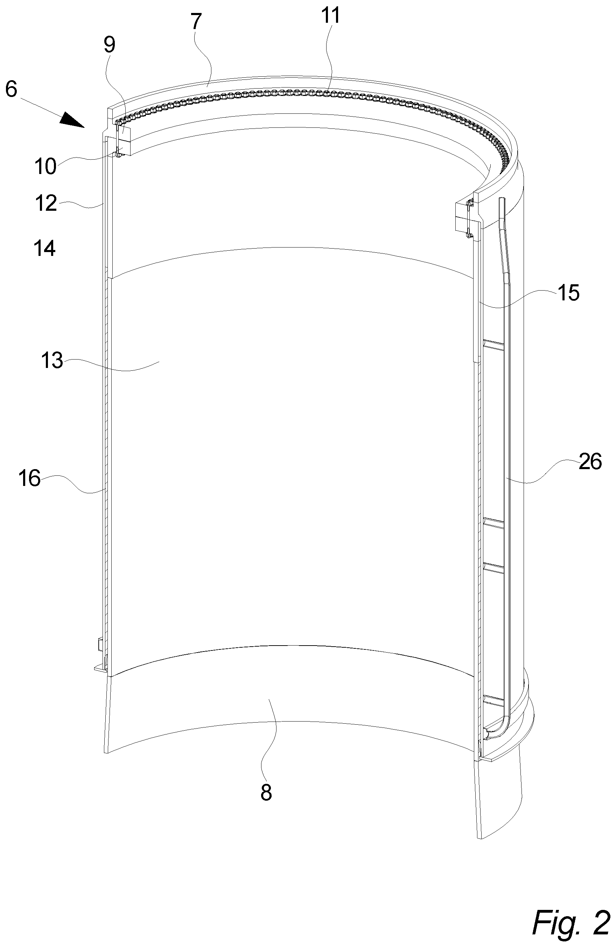

In this embodiment the monopile foundation 8 is rammed into the seabed (not shown) and it is therefore not desirable to weld brackets, ladders, boat landings, anodes, fixtures or other onto the monopile 8 as this would introduce large stress concentrations in the monopile still which is undesirable as regards fatigue, and there is a risk that these additional elements would loosen or be damaged during the ramming process. Thus, in this embodiment the transition piece 7 comprises a skirt part 12 vertically overlapping the upper part (see figs. 2-4) of the monopile 8, so that ladders, boat landings 19, platforms and other can be connected to the transition piece 7 before installation and thereby installed along with the transition piece 7. In this embodiment the boat landing 19 will extend all the way up to the top of the transition piece 7 as disclosed in fig. 1 and will ensure that a boat can moor at the wind turbine installation 17 no matter if it is low tide, high tide, calm sea or storm.

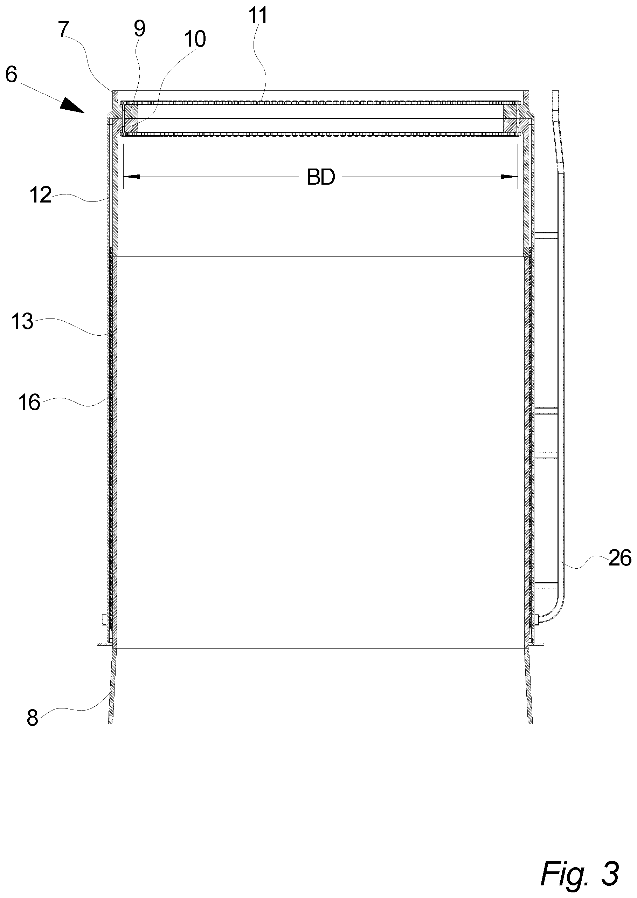

Fig. 2 illustrates a cross section through the middle of a transition piece 7 and monopile foundation 8, as seen in an isometric view and fig. 3 illustrates a cross section through the middle of a transition piece 7 and monopile foundation 8, as seen from the front. It should be noted that in figs. 2 and 3 only the bottom part of the transition piece 7 is disclosed. The upper part of the transition piece 7 that is not disclosed in figs. 2 and 3 will continue vertically upwards to end in a connection flange to which the wind turbine tower 2 (see fig. 1) is connected by means of bolts. Likewise, the monopile foundation 8 will extend further downward into the seabed as explained in relation to fig. 1.

In this embodiment the flanged connection 6 between the transition piece 7 and the monopile foundation 8 comprises a bottom L-shaped flange 9 of the transition piece 7 connected to a top L-shaped flange 10 of the monopile foundation 8 by means of a plurality of bolts 11 arranged in a bolt circle all the way around the flanged connection 6. In this embodiment a skirt part 12 is extending downwards from the bottom L-shaped flange 9 of the transition piece 7 so that the skirt part 12 is encircling the upper part 13 of the monopile foundation 8. As will be discussed in more details the inside surface 14 of the skirt part 12 is in this embodiment connected to the outside surface 15 of the upper part 13 of the monopile foundation 8 by means of a cement containing substance 16 which in this embodiment is grout. In this embodiment the vertical extent of the skirt part 12 is around 130% of the outside diameter of the upper part 13 of the monopile foundation 8 but in another embodiment the vertical extent of the skirt part 12 could be shorter - such as 115%, 100%, 80% or even less of the outside diameter the upper part 13 of the monopile foundation 8 - or the vertical extent of the skirt part 12 could be longer - such as 150%, 175%, 200% or even more of the outside diameter of the upper part 13 of the monopile foundation 8.

The embodiments of figs. 2 and 3 also discloses a part of a cement containing substance inlet tube 26 connected to the transition piece 7 by means of welding. The cement containing substance inlet tube 26 is used for injecting the cement containing substance into the annulus formed by the transition piece skirt part 12 and the upper part of the monopile 13.

In this embodiment the inside surface 14 of the skirt part 12 is connected to the outside surface 15 of the upper part 13 of the monopile foundation 8 by means of a cement containing substance 16 in that after the monopile foundation 8 has been rammed into the seabed and the transition piece 7 has been lowered down over and connected to the monopile foundation 8 by means of the bolts 11, whereafter grout has been pumped into the gap between the monopile foundation 8 and the skirt part 12. In this embodiment, the cement containing substance 16 is only located in the bottom 75% of the vertical overlap of the skirt part 12 and the monopile foundation 8 but in another embodiment the cement containing substance 16 could be located in more of this vertical overlap - such as the bottom 85%, 95% or even 100% of this vertical overlap - or the cement containing substance 16 could be located in less of this vertical overlap - such as the bottom 70%, 55%, 40% or even less of this vertical overlap.

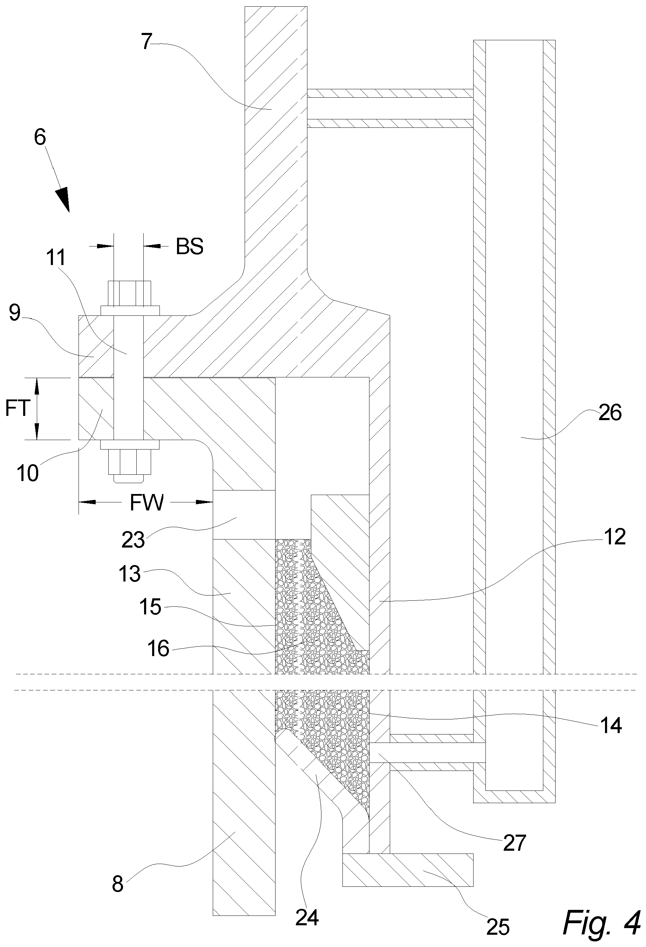

Fig. 4 illustrates a closeup cut out through the middle of one side of a transition piece 7 and monopile foundation 8, as seen from the front. In this embodiment the middle part of the overlap between the skirt part 12 and the monopile foundation 8 has been cut out as indicated by the two horizontal dotted lines.

In this embodiment the monopile foundation 8 is provided with a plurality of overflow orifices 23 so in this embodiment the cement containing substance 16 is pumped into the gap between the monopile foundation 8 and the skirt part 12 until it starts pouring out of the overflow orifices 23 at which point almost the entire vertical extent of the gap between the monopile foundation 8 and the skirt part 12 has been filled with the cement containing substance 16. To prevent the cement containing substance 16 from running out of the gap at the bottom the skirt part 12 is in this embodiment provided with a seal 24 that will ensure that the cement containing substance 16 is retained in the gap until the cement containing substance 16 has hardened.

In this embodiment the skirt part 12 is also provided with a skirt flange 25 at the bottom which is used to fasten the transition piece onto a vessel deck during transportation and may aid in maintaining the relatively thin-walled skirt part 12 circular during the installation process.

When structurally designing the flanged connection 6 between the transition piece 7 and the monopile foundation 8 the dimensions of the bottom L-shaped flange 9 of the transition piece 7, the top L-shaped flange 10 of the monopile foundation 8, and/or the plurality of bolts 11 are modified in response to the specific loads they have to be able to accept given the design load the wind turbine installation is affected by at a given installation site. I.e., structurally designing the flanged connection 6 comprises dimensioning flange thickness FT and/or flange width FW of the bottom L-shaped flange 9 of the transition piece 7 and the top L-shaped flange 10 of the monopile foundation 8, and/or dimensioning the bolt size BS - i.e. the diameter of the bolts - and/or number of bolts 11 used for connecting the bottom L-shaped flange 9 of the transition piece 7 to the top L-shaped flange 10 of the monopile foundation 8, and/or dimensioning the bolt circle diameter BD (see fig. 2) - i.e., how close the bolt circle is arranged to the inside wall of the transition piece 7 and the monopile foundation 8.

In this embodiment a cement containing substance inlet tube 26 is connected to the transition piece 7 so that liquid cement containing substance 16 may be guided from above sea level down to an inlet opening 27 arranged at the bottom of the annulus formed by the transition piece skirt part 12 overlapping the upper part of the monopile 13. In this way this annulus is filled from the bottom and upwards with liquid cement containing substance 16 which subsequently hardens or sets to form a solid connection between the inside surface 14 of the skirt part 12 and the outside surface 15 of the upper part 13 of the monopile foundation 8 in the overlap annulus.

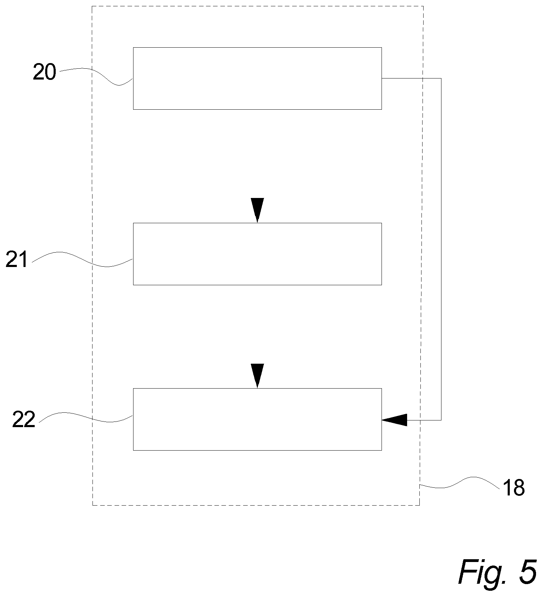

Fig. 5 illustrates a simplified table of the method for structurally designing a flanged connection 6 as disclosed in relation to figs. 2-4. In this embodiment the first step 20 includes determining design load specifications for the offshore wind turbine installation 17 associated with a specific erection site of the offshore wind turbine installation 17. I.e., in this embodiment environmental loads regarding wind-, wave- and current loads at the erection site are obtained and by means of these information the actual design load specifications for the offshore wind turbine installation 17 at the specific erection site is computed by means of a computer system 18. In this case only the bending loads are included in the design load specifications because the bending loads by far are the most important loads in relation to structurally designing a flanged connection 6. However, in another embodiment also shear loads and/or gravity loads could be included in the design load specifications.

In a second step 21 the load carrying contribution of the cement containing substance 16 under the design load specifications determined in the first step 20 is computed by means of a computer system 18. I.e., in the second step 21 it is calculated how much of - in this case - the bending loads, the cement containing substance 16 connecting the inside surface 14 of the skirt part 12 to the outside surface 15 of the upper part 13 of the monopile foundation is able to carry. In this embodiment the only cement containing substance 16 located in the bottom 50% of the vertical overlap of skirt part 12 and the monopile foundation 8 is included in the computing of the load carrying contribution of the cement containing substance 16 but in another embodiment cement containing substance 16 located in more of this vertical overlap - such as the bottom 58%, 77%, 92% or even more - could be included in the computing of the load carrying contribution of the cement containing substance 16 or less could be included - such as the bottom 46%, 37%, 32% or even less.

In a third step 22 of the method the dimensions of the bottom L-shaped flange 9 of the transition piece 7, the dimensions of the top L-shaped flange 10 of the monopile foundation 8, and the dimensions of the plurality of bolts 11 are calculated by means of the computer system 18 under the design load specifications determined in the first method step 20 while taking into account the load carrying contribution of the cement containing substance 16 computed in the second method step 21. I.e., in this embodiment the flange thickness FT and the flange width FW of the bottom L-shaped flange 9 of the transition piece 7 and the top L-shaped flange 10 of the monopile foundation 8, the bolt size BS, number of bolts 11 used in the flanged connection 6, and the bolt circle diameter BD (see fig. 2) are dimensioned in the third method step on the basis of the bending loads affecting the flanged connection 6 while including the load carrying contribution of the cement containing substance 16 computed in the second method step 21. However, in another embodiment only some or only one of these features would be dimensioned in the third method step - i.e., in another embodiment only the bolt size BS, only the bolt size BS and the number of bolts 11, only the flange thickness FT and the flange width FW of the L-shaped flanges 9, 10 and the bolt size BS, or another combination would be dimensioned in the third method step to structurally design the flanged connection 6 between the transition piece 7 and the monopile foundation 8 of the offshore wind turbine installation 17.

In this embodiment the first method step 20, the second method step 21 and the third method step 22 are performed by means of the same computer system 18 but in another embodiment the first method step 20, the second method step 21 and/or the third method step 22 could be performed on separate computer systems 18.

More specifically, a Finite Element Model (FEM) representing the monopile, a part of the transition piece and skirt, and the cement containing substance may be modelled in an appropriate Finite Element Analysis (FEA) software. The model may be discretized into a mesh so as to represent the structure by a finite number of elements formed by nodes, each node having a certain number of degrees of freedom (e.g. displacement and rotation). Each element may represent a part of the structure, and each element can be described by a spring stiffness, k. To model the entire structure, each of the element stiffness matrices may be assembled in a global stiffness matrix, [K].

To find the deformations, following problem may solved:

$$\{F\} = [K] * \{x\}$$

Where {F} is the (known) force vector representing a force/boundary condition at each node of the elements and {x} is the (unknown) displacement vector representing the displacement of each node. The stiffness matrix [K] is known via the material properties and geometry. This equation can be solved either directly or iteratively. Due to the complexity of the, it may be solved iteratively until a convergence criterion is reached.

Once the mathematical problem is solved by a computer system, a displacement of each node is computed. From displacement, the strain and stress can be calculated based on the constitutive equations in solid mechanics.

In this embodiment, the load carrying contribution of the cement containing substance is computed by modelling the cement containing substance as a non-linear material. However, in another embodiment, the cement containing substance may be modelled with linear material or elastoplastic material behavior.

In this embodiment, the structure is modelled with solid elements. However, in another embodiment, the structure can be modelled with shell elements.

It is advantageous if the monopile, transition piece and cement containing substance are modelled with shell elements in that this is a much easier element to discretize the geometry with, and also results in less equations to be solved (as it is a 2D element opposed to the solid element being 3D), whereby the method of designing the flanged connection is less computation heavy.

The Finite Element Model could be set up with a fixed displacement boundary condition at an appropriate surface of the model in order to avoid rigid body motion. The appropriate surface, e.g. the flange surface, is then loaded with the computed design load specification. The contact between the cement containing substance and the monopile and transition piece skirt could be modelled with an appropriate contact method and taking into account the friction between the materials.

The invention has been exemplified above with reference to specific examples of wind turbines 1, flanged connections 6, transition pieces 7 and other. However, it should be understood that the invention is not limited to the particular examples described above but may be designed and altered in a multitude of varieties within the scope of the invention as specified in the claims.

**List**

1. Wind turbine
2. Tower
3. Nacelle
4. Rotor
5. Blade
6. Flanged connection
7. Transition piece
8. Monopile foundation
9. Bottom L-shaped flange of transition piece
10. Top L-shaped flange of monopile foundation
11. Bolt
12. Skirt part
13. Upper part of monopile foundation
14. Inside surface of skirt part
15. Outside surface of upper part of monopile foundation
16. Cement containing substance
17. Offshore wind turbine installation
18. Computer system
19. Boat landing
20. First method step
21. Second method step
22. Third method step
23. Overflow orifice
24. Seal
25. Skirt flange
26. Cement containing substance inlet tube
27. Inlet opening
FT. Flange thickness
FW. Flange width
BS. Bolt size
BD. Bolt circle diameter

**Claims**

1. A method for structurally designing a flanged connection (6) between a transition piece (7) and a monopile foundation (8) of an offshore wind turbine installation (17), wherein said flanged connection (6) comprises a bottom L-shaped flange (9) of said transition piece (7) connected to a top L-shaped flange (10) of said monopile foundation (8) by means of a plurality of bolts (11) of said flanged connection (6), wherein a skirt part (12) extending downwards from said transition piece (7) is encircling an upper part (13) of said monopile foundation (8) and wherein an inside surface (14) of said skirt part (12) is connected to an outside surface (15) of said upper part (13) of said monopile foundation (8) by means of a cement containing substance (16), said method comprising the steps of:

> • determining design load specifications for said offshore wind turbine installation (17) by means of a computer system (18), said design load specifications being associated with a specific erection site of said offshore wind turbine installation (17),
> • computing the load carrying contribution of said cement containing substance (16) under said design load specifications by means of a computer system (18), and
> • dimensioning said bottom L-shaped flange (9) of said transition piece (7), said top L-shaped flange (10) of said monopile foundation (8), and said plurality of bolts (11) under said design load specifications while taking into account said computed load carrying contribution of the cement containing substance (16) by means of a computer system (18).

2. A method according to claim 1, wherein only cement containing substance (16) located in the bottom 80%, preferably the bottom 65% and most preferred the bottom 50% of the vertical overlap of said skirt part (12) of said transition piece (7) and said upper part (13) of said monopile foundation (8) is included in said computing of said load carrying contribution of said cement containing substance (16).

3. A method according to claim 1 or 2, wherein said design load specifications associated with said specific erection site of said offshore wind turbine installation (17) are determined on the basis of permanent loads comprising gravity loads and/or environmental loads comprising wind-, wave-, seismic- and/or current loads at said erection site.

4. A method according to any of the preceding claims, wherein said method further comprises excluding any gravity loads when determining said design load specifications for said offshore wind turbine installation (17).

5. A method according to any of the preceding claims, wherein said method further comprises excluding any shear loads when determining said design load specifications for said offshore wind turbine installation (17).

6. A method according to any of the preceding claims, wherein said load carrying contribution of said cement containing substance (16) under said design load specifications is computed via material stiffness matrices representing the stiffness of the cement containing substance (16).

7. A method according to any of the preceding claims, wherein said load carrying contribution of said cement containing substance (16) under said design load specifications is computed by modelling said cement containing substance (16) as a non-linear material.

8. A method according to any of the preceding claims, wherein said method further comprises the step of selecting said cement containing substance (16) such that the elastic modulus of said cement containing substance (16) is between 2 and 14 times, preferably between 3 and 13 times and most preferred between 4 and 12 times smaller than the elastic modulus of said monopile foundation (8) and/or said skirt part (12).

9. A method according to any of the preceding claims, wherein said method further comprises including only bending moment loads when determining said design load specifications for said offshore wind turbine installation (17).

10. A method according to any of the preceding claims, wherein said cement containing substance (16) is grout.

11. A method according to any of the preceding claims, wherein said design load specifications comprise a maximum load of a load time-series, said load time-series representing the loads on said flanged connection (6) associated with said specific erection site of said offshore wind turbine installation (17) as a function of time.

12. A method according to any of the preceding claims, wherein said design load specification comprises one or more of maximum bending moment, maximum shear force, maximum torsion and minimum axial force of a load time-series representing the loads on said flanged connection (6) associated with said specific erection site of said offshore wind turbine installation (17) as a function of time.

13. A method according to any of the preceding claims, wherein said design load specification comprises only a maximum bending moment of a load time-series representing the bending moment loads on said flanged connection (6) associated with said specific erection site of said offshore wind turbine installation (17) as a function of time.

**14.** A method according to any of the preceding claims, wherein the step of dimensioning said bottom L-shaped flange (9) of said transition piece (7), said top L-shaped flange (10) of said monopile foundation (8), and said plurality of bolts (11) comprises dimensioning flange thickness (FT) and/or flange width (FW) and/or bolt size (BS) and/or number of bolts (11) and/or bolt circle diameter (BD).

**15.** A method according to any of the preceding claims, wherein said method further comprises the step of selecting said cement containing substance (16) such that the friction coefficient between said cement containing substance (16) and said outside surface (15) of said upper part (13) of said monopile foundation (8) and/or between said cement containing substance (16) and said inside surface (14) of said skirt part (12) is between 0.10 and 0.9, preferably between 0.12 and 0.85, and most preferred between 0.14 and 0.8.

**Patentansprüche**

**1.** Verfahren zum konstruktiven Entwerfen einer Flanschverbindung (6) zwischen einem Übergangsstück (7) und einem Fundament (8) mit einem Pfeiler einer Offshore-Windturbinenanlage (17), wobei die Flanschverbindung (6) einen unteren L-förmigen Flansch (9) des Übergangsstücks (7) umfasst, der mit einem oberen L-förmigen Flansch (10) des Fundaments (8) mit einem Pfeiler mittels einer Vielzahl von Bolzen (11) der Flanschverbindung (6) verbunden ist, wobei ein Schürzenteil (12), das sich von dem Übergangsstück (7) nach unten erstreckt, ein Oberteil (13) des Fundaments (8) mit einem Pfeiler umgibt und wobei eine Innenoberfläche (14) des Schürzenteils (12) mit einer Außenoberfläche (15) des Oberteils (13) des Fundaments (8) mit einem Pfeiler mittels einer zementhaltigen Substanz (16) verbunden ist, das Verfahren umfassend die Schritte:

> • Bestimmen von Entwurfslastspezifikationen für die Offshore-Windturbinenanlage (17) mittels eines Computersystems (18), wobei die Entwurfslastspezifikationen mit einem spezifischen Aufstellort der Offshore-Windturbinenanlage (17) verknüpft sind,
> • Berechnen des lasttragenden Beitrags der zementhaltigen Substanz (16) unter den Entwurfslastspezifikationen mittels eines Computersystems (18), und
> • Dimensionieren des unteren L-förmigen Flanschs (9) des Übergangsstücks (7), des oberen L-förmigen Flanschs (10) des Fundaments (8) mit einem Pfeiler und der Vielzahl von Bolzen (11) unter den Entwurfslastspezifikationen, während der berechnete lasttragende Beitrag der zementhaltigen Substanz (16) mittels eines Computersystems (18) in Betracht gezogen wird.

**2.** Verfahren nach Anspruch 1, wobei nur die zementhaltige Substanz (16), die sich in den unteren 80 %, vorzugsweise den unteren 65 % und am meisten bevorzugt den unteren 50 % der vertikalen Überlappung des Schürzenteils (12) des Übergangsstücks (7) und des Oberteils (13) des Fundaments (8) mit einem Pfeiler befindet, bei dem Berechnen des lasttragenden Beitrags der zementhaltigen Substanz (16) eingeschlossen ist.

**3.** Verfahren nach Anspruch 1 oder 2, wobei die Entwurfslastspezifikationen, die mit dem spezifischen Aufstellort der Offshore-Windturbinenanlage (17) verknüpft sind, auf der Basis von permanenten Lasten, umfassend Schwerkraftlasten und/oder Umgebungslasten, umfassend Wind-, Wellen-, seismische und/oder Strömungslasten an dem Aufstellort, bestimmt werden.

**4.** Verfahren nach einem der vorstehenden Ansprüche, wobei das Verfahren ferner ein Ausschließen jeglicher Schwerkraftlasten umfasst, wenn die Entwurfslastspezifikationen für die Offshore-Windturbinenanlage (17) bestimmt werden.

**5.** Verfahren nach einem der vorstehenden Ansprüche, wobei das Verfahren ferner das Ausschließen jeglicher Schublasten umfasst, wenn die Entwurfslastspezifikationen für die Offshore-Windturbinenanlage (17) bestimmt werden.

**6.** Verfahren nach einem der vorstehenden Ansprüche, wobei der lasttragende Beitrag der zementhaltigen Substanz (16) unter den Entwurfslastspezifikationen über Materialsteifigkeitsmatrizen, die die Steifigkeit der zementhaltigen Substanz (16) darstellen, berechnet wird.

**7.** Verfahren nach einem der vorstehenden Ansprüche, wobei der lasttragende Beitrag der zementhaltigen Substanz (16) unter den Entwurfslastspezifikationen durch Modellieren der zementhaltigen Substanz (16) als ein nichtlineares Material berechnet wird.

**8.** Verfahren nach einem der vorstehenden Ansprüche, wobei das Verfahren ferner den Schritt eines Auswählens der zementhaltigen Substanz (16) derart umfasst, dass der Elastizitätsmodul der zementhaltigen Substanz (16) zwischen 2- und 14-mal, vorzugsweise zwischen 3- und 13-mal und am meisten bevorzugt zwischen 4- und 12-mal kleiner als der Elastizitätsmodul des Fundaments (8) mit einem Pfeiler und/oder des Schürzenteils (12) ist.

**9.** Verfahren nach einem der vorstehenden Ansprüche, wobei das Verfahren ferner umfasst, nur dann Biegemomentlasten einzuschließen, wenn die Entwurfslastspezifikationen für die Offshore-Windturbinenanlage (17) bestimmt werden.

**10.** Verfahren nach einem der vorstehenden Ansprüche, wobei die zementhaltige Substanz (16) Mörtel ist.

**11.** Verfahren nach einem der vorstehenden Ansprüche, wobei die Entwurfslastspezifikationen eine maximale Last einer Lastzeitreihe umfassen, wobei die Lastzeitreihe die Lasten auf die Flanschverbindung (6), die mit dem spezifischen Aufstellort der Offshore-Windturbinenanlage (17) verknüpft sind, als eine Funktion von Zeit darstellt.

**12.** Verfahren nach einem der vorstehenden Ansprüche, wobei die Entwurfslastspezifikation eines oder mehrere von maximalem Biegemoment, maximaler Schubkraft, maximaler Torsion und minimaler Axialkraft einer Lastzeitreihe umfasst, die die Lasten auf die Flanschverbindung (6), die mit dem spezifischen Aufstellort der Offshore-Windturbinenanlage (17) verknüpft sind, als eine Funktion von Zeit darstellt.

**13.** Verfahren nach einem der vorstehenden Ansprüche, wobei die Entwurfslastspezifikation nur ein maximales Biegemoment einer Lastzeitreihe umfasst, die die Biegemomentlasten auf die Flanschverbindung (6), die mit dem spezifischen Aufstellort der Offshore-Windturbinenanlage (17) verknüpft sind, als eine Funktion von Zeit darstellt.

**14.** Verfahren nach einem der vorstehenden Ansprüche, wobei der Schritt des Dimensionierens des unteren L-förmigen Flanschs (9) des Übergangsstücks (7), des oberen L-förmigen Flanschs (10) des Fundaments (8) mit einem Pfeiler und der Vielzahl von Bolzen (11) das Dimensionieren einer Flanschdicke (FT) und/oder einer Flanschbreite (FW) und/oder einer Bolzengröße (BS) und/oder einer Anzahl von Bolzen (11) und/oder eines Bolzenkreisdurchmessers (BD) umfasst.

**15.** Verfahren nach einem der vorstehenden Ansprüche, wobei das Verfahren ferner den Schritt des Auswählens der zementhaltigen Substanz (16) derart umfasst, dass der Reibungskoeffizient zwischen der zementhaltigen Substanz (16) und der Außenoberfläche (15) des Oberteils (13) des Fundaments (8) mit einem Pfeiler und/oder zwischen der zementhaltigen Substanz (16) und der Innenoberfläche (14) des Schürzenteils (12) zwischen 0,10 und 0,9, vorzugsweise zwischen 0,12 und 0,85 und am meisten bevorzugt zwischen 0,14 und 0,8 liegt.

**Revendications**

**1.** Procédé pour la conception structurale d'une liaison à brides (6) entre une pièce de transition (7) et une fondation monopieu (8) d'une installation de turbine éolienne offshore (17), dans lequel ladite liaison à brides (6) comprend une bride en forme de L du bas (9) de ladite pièce de transition (7) reliée à une bride en forme de L du haut (10) de ladite fondation monopieu (8) au moyen d'une pluralité de boulons (11) de ladite liaison à brides (6), dans lequel une partie de jupe (12) s'étendant vers le bas à partir de ladite pièce de transition (7) encercle une partie supérieure (13) de ladite fondation monopieu (8) et dans lequel une surface intérieure (14) de ladite partie de jupe (12) est reliée à une surface extérieure (15) de ladite partie supérieure (13) de ladite fondation monopieu (8) au moyen d'une substance contenant du ciment (16), ledit procédé comprenant les étapes consistant à :

  • déterminer des spécifications de charge de conception pour ladite installation de turbine éolienne offshore (17) au moyen d'un système informatique (18), lesdites spécifications de charge de conception étant associées à un site de montage spécifique de ladite installation de turbine éolienne offshore (17),
  • calculer la contribution au support de charge de ladite substance contenant du ciment (16) sous lesdites spécifications de charge de conception au moyen d'un système informatique (18), et
  • dimensionner ladite bride en forme de L du bas (9) de ladite pièce de transition (7), ladite bride en forme de L du haut (10) de ladite fondation monopieu (8), et ladite pluralité de boulons (11) sous lesdites spécifications de charge de conception tout en prenant en compte ladite contribution au support de charge calculée de la substance contenant du ciment (16) au moyen d'un système informatique (18).

**2.** Procédé selon la revendication 1, dans lequel uniquement la substance contenant du ciment (16) située dans les 80 % du bas, de préférence les 65 % du bas et le plus préférablement les 50 % du bas du chevauchement vertical de ladite partie de jupe (12) de ladite pièce de transition (7) et de ladite partie supérieure (13) de ladite fondation monopieu (8) est incluse dans ledit calcul de ladite contribution au support de charge de ladite substance contenant du ciment (16).

**3.** Procédé selon la revendication 1 ou 2, dans lequel lesdites spécifications de charge de conception associées audit site de montage spécifique de ladite installation de turbine éolienne offshore (17) sont déterminées en fonction de charges permanentes comprenant les charges de gravité et/ou les charges environnementales comprenant les charges dues au vent, aux vagues, aux séismes et/ou aux courants au niveau dudit site de montage.

4. Procédé selon l'une quelconque des revendications précédentes, dans lequel ledit procédé comprend en outre l'exclusion de quelconques charges de gravité lors de la détermination desdites spécifications de charge de conception pour ladite installation de turbine éolienne offshore (17).

5. Procédé selon l'une quelconque des revendications précédentes, dans lequel ledit procédé comprend en outre l'exclusion de quelconques charges de cisaillement lors de la détermination desdites spécifications de charge de conception pour ladite installation de turbine éolienne offshore (17).

6. Procédé selon l'une quelconque des revendications précédentes, dans lequel ladite contribution au support de charge de ladite substance contenant du ciment (16) sous lesdites spécifications de charge de conception est calculée par le biais de matrices de rigidité de matériau représentant la rigidité de la substance contenant du ciment (16).

7. Procédé selon l'une quelconque des revendications précédentes, dans lequel ladite contribution au support de charge de ladite substance contenant du ciment (16) sous lesdites spécifications de charge de conception est calculée par la modélisation de ladite substance contenant du ciment (16) en guise de matériau non linéaire.

8. Procédé selon l'une quelconque des revendications précédentes, dans lequel ledit procédé comprend en outre l'étape consistant à choisir ladite substance contenant du ciment (16) de telle sorte que le module élastique de ladite substance contenant du ciment (16) est entre 2 et 14 fois, de préférence entre 3 et 13 fois et le plus préférablement entre 4 et 12 fois plus petit que le module élastique de ladite fondation monopieu (8) et/ou de ladite partie de jupe (12).

9. Procédé selon l'une quelconque des revendications précédentes, dans lequel ledit procédé comprend en outre l'inclusion uniquement de charges de moment de flexion lors de la détermination desdites spécifications de charge de conception pour ladite installation de turbine éolienne offshore (17).

10. Procédé selon l'une quelconque des revendications précédentes, dans lequel ladite substance contenant du ciment (16) est du coulis.

11. Procédé selon l'une quelconque des revendications précédentes, dans lequel lesdites spécifications de charge de conception comprennent une charge maximale d'une série temporelle de charges, ladite série temporelle de charges représentant les charges sur ladite liaison à brides (6) associées audit site de montage spécifique de ladite installation de turbine éolienne offshore (17) en fonction du temps.

12. Procédé selon l'une quelconque des revendications précédentes, dans lequel ladite spécification de charge de conception comprend un ou plusieurs parmi un moment de flexion maximal, une force de cisaillement maximale, une torsion maximale et une force axiale minimale d'une série temporelle de charges représentant les charges sur ladite liaison à brides (6) associées audit site de montage spécifique de ladite installation de turbine éolienne offshore (17) en fonction du temps.

13. Procédé selon l'une quelconque des revendications précédentes, dans lequel ladite spécification de charge de conception comprend uniquement un moment de flexion maximal d'une série temporelle de charges représentant les charges de moment de flexion sur ladite liaison à brides (6) associées audit site de montage spécifique de ladite installation de turbine éolienne offshore (17) en fonction du temps.

14. Procédé selon l'une quelconque des revendications précédentes, dans lequel l'étape consistant à dimensionner ladite bride en forme de L du bas (9) de ladite pièce de transition (7), de ladite bride en forme de L du haut (10) de ladite fondation monopieu (8), et de ladite pluralité de boulons (11) comprend le dimensionnement d'une épaisseur de bride (FT) et/ou d'une largeur de bride (FW) et/ou d'une taille de boulon (BS) et/ou d'un nombre de boulons (11) et/ou d'un diamètre de cercle de boulon (BD).

15. Procédé selon l'une quelconque des revendications précédentes, dans lequel ledit procédé comprend en outre l'étape consistant à choisir ladite substance contenant du ciment (16) de telle sorte que le coefficient de frottement entre ladite substance contenant du ciment (16) et ladite surface extérieure (15) de ladite partie supérieure (13) de ladite fondation monopieu (8) et/ou entre ladite substance contenant du ciment (16) et ladite surface intérieure (14) de ladite partie de jupe (12) est entre 0,10 et 0,9, de préférence entre 0,12 et 0,85, et le plus préférablement entre 0,14 et 0,8.

*Fig. 1*

*Fig. 2*

Fig. 3

Fig. 4

*Fig. 5*

**EP 4 484 746 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2497878 B1
- EP 2508677 A1